# EUROPÄISCHE PATENTSCHRIFT

(11) **EP 0 845 506 B1**
(45) Veröffentlichungstag und Bekanntmachung des Hinweises auf die Patenterteilung: **21.02.2001**
(21) Anmeldenummer: 97119780.1
(22) Anmeldetag: 12.11.1997
(51) Int. Cl.: C09C 1/00, C09C 3/06, C04B 33/14

(54) **Pigmente zur Erzeugung purpurfarbener keramischer Dekore, Verfahren zu ihrer Herstellung und deren Verwendung**
Pigments for producing purple-coloured ceramic decorations, process for producing them and their use
Pigments pour la production de décorations céramiques pourprées, procédé pour les produire et leur utilisation

(30) Priorität: 28.11.1996 DE 19649067; 06.02.1997 DE 19704470; 06.09.1997 DE 19739124
(43) Veröffentlichungstag der Anmeldung: 03.06.1998
(73) Patentinhaber: dmc2 Degussa Metals Catalysts Cerdec AG, 60287 Frankfurt am Main (DE)
(72) Erfinder: Letschert, Hans-Peter, Dr., 63450 Hanau (DE); Wilfert, Jenny, 63456 Hanau (DE)

(56) Entgegenhaltungen:
- DE-A- 3 731 174
- DE-A- 4 106 520
- DE-A- 4 411 104
- PATENT ABSTRACTS OF JAPAN vol. 013, no. 529 (C-658), 27. November 1989 & JP 01 215865 A (MIYOSHI KASEI:KK), 29. August 1989
- CHEMICAL ABSTRACTS, vol. 98, no. 26, 27. Juni 1983 Columbus, Ohio, US; abstract no. 220740, ANDREICA, VICTORIA ET AL: "Ceramic colors based on colloidal gold" XP002095657 & RO 64 442 A (INSTITUTUL DE CERCETARI PENTRU INDUSTRIA STICLEI SI CERAMICII FINE, RO)

## Beschreibung

Die Erfindung betrifft Pigmente zur Erzeugung purpurfarbener keramischer Dekore, Verfahren zu ihrer Herstellung und deren Verwendung. Die Pigmente basieren auf einem einbrennfähigen Trägermaterial, insbesondere einem Glasfluß, einem Oxidhydrat und einer Goldverbindung oder kolloidalem Gold. Sowohl farblose als auch gefärbte erfindungsgemäße Pigmente, welche unmittelbar als Dekorfarbe verwendet werden können, entwickeln beim Brand eine brillante, auch bei hohen Brenntemperaturen stabile Purpurfarbe.

Purpurpigmente auf der Basis von keramischen Materialien und kolloidalem Gold sind auf unterschiedliche Weise zugänglich und finden schon lange Verwendung zur Erzeugung keramischer Dekore sowie zum Pigmentieren von Kunststoffen, Lacken, kosmetischen Produkten, Glas- und Dekorfarben.

Bis vor kurzem umfaßte die Herstellung von Purpurpigmenten mehrere Prozeßstufen: (a) Ausfällung von gelförmigem Cassius'schem Goldpurpur (an Zinn(IV)-oxidhydrat adsorbiertes kolloidales Gold) aus einer wäßrigen Goldsalzlösung mittels eines Zinn(II)-Salzes, (b) Aufmischen des feuchten Goldpurpurs mit feingemahlenem Glas, (c) Vorsintern des Gemisches bei 600 bis 800 °C, wobei die Goldpartikel zumindest teilweise von Glas umhüllt werden, und (d) Feinmahlen des gesinterten Materials und, soweit erforderlich, Einstellung des geforderten Farbtons durch Zugabe von Silberverbindungen und/oder anderen Flußmitteln. Gravierende Nachteile dieses Verfahrens bestehen darin, daß das Abtrennen des gelförmigen Goldpurpurs von der wäßrigen Lösung der Vorstufe (a) recht aufwendig ist, der Farbton des fertigen Pigments in schwer reproduzierbarer Weise von der Alterung des Goldpurpurs beeinflußt wird - beispielsweise Braunfärbung im Falle eines Antrocknens - sowie zwei die Raum-Zeit-Ausbeute mindernde Mahlstufen und eine energieintensive Sinterstufe erforderlich sind. Die so hergestellten Pigmente erwiesen sich ferner als bei höherer Brenntemperatur (um 1200 °C) nicht ausreichend farbstabil, das heißt, sie verblassen unter derartigen Brennbedingungen.

Es hat nicht an Versuchen gefehlt, das oben skizzierte Verfahren zu verbessern:

Durch gemeinsames Ausfällen eines Goldpurpurs in Gegenwart von Oxidhydraten bildenden Stoffen, wie Al- und Sn-Salzen, lassen sich leichter filtrierbare Copräzipitate aus kolloidalem Gold und den Oxidhydraten gewinnen, wobei gleichzeitig der Farbton der Copräzipitate besser reproduzierbar und alterungsbeständiger ist - beispielhaft wird auf das RO-Patent 64442 B (Chemical Abstracts 98 (26): 22 07 40e) hingewiesen. Die weiteren Prozeßstufen zur Herstellung der Purpurpigmente entsprechen allerdings den vorgenannten Stufen (b), (c) und (d), so daß der gesamte Verfahrensaufwand weiterhin beträchtlich ist. Gemäß DD-PS 143 423 kann die Ausfällung des Goldpurpurs auch in Gegenwart von inertem Material, beispielsweise Kaolin, Feldspat oder Pegmatit, durchgeführt werden. Anschließend wird der purpurfarbene feuchte Niederschlag mit einem Glasfluß und zwecks Farbtonsteuerung zusätzlich mit Silbercarbonat homogen vermischt, naß gemahlen, bei 650 bis 680 °C gesintert und wieder gemahlen. Auch diesem Verfahren haften die vorerwähnten Nachteile an, insbesondere auch eine ungenügende Farbstabilität bei höherer Brenntemperatur.

Bekannt sind auch purpurfarbene Perlglanzpigmente auf der Basis von mit Metalloxiden beschichteten plättchenförmigen Teilchen, insbesondere TiO₂ beschichtetem Glimmer, mit einer Deckschicht aus Zinnoxid, in welche kolloidales Gold eingelagert ist - vgl. DE-OS 37 31 174. Die goldhaltige Beschichtung befindet sich hier immer auf einer Metalloxidschicht, welche zunächst auf einen plättchenförmigen Träger aufgebracht werden muß. Im Verfahren der DE-OS 37 31 174 wird auf plättchenförmige Substrate, insbesondere Glimmerpartikel, zunächst durch Hydrolyse von Metallsalzen eine Metalloxid- oder Metalloxidhydrat-Schicht, insbesondere eine Schicht aus TiO₂ oder Titandioxidhydrat ausgefällt, anschließend werden in wäßriger Phase durch Hydrolyse eines Zinn(IV)salzes in Gegenwart eines Goldsalzes und eines Reduktionsmittels, insbesondere eines Zinn(II)salzes, gleichzeitig Zinndioxid oder Zinndioxidhydrat und elementares Gold in kolloidaler Form ausgefällt. An die beiden Fällungsschritte schließt sich ein Kalzinierungsschritt bei 700 bis 1100 °C an. Die Herstellung derartiger Pigmente ist sehr aufwendig und damit teuer.

In der DE-OS 41 06 520 werden Purpurpigmente auf der Basis von Glasfritten mit einem mittleren Teilchendurchmesser im Bereich von 0,5 bis 50 µm mit einer 0,05 bis 5 Gew.-% kolloidales Gold und gegebenenfalls farbtonmodifizierende andere Metalle enthaltenden Beschichtung offenbart. Die Beschichtung erfolgt durch Reduktion einer wasserlöslichen Goldverbindung in einer wäßrigen Suspension in Gegenwart einer Glasfritte mittels eines Reduktionsmittels, wie Glucose. Die so erhaltenen Pigmente weisen eine ungenügende Farbstabilität beim Hochtemperaturbrand auf, das heißt, sie verblassen mit zunehmender Brenntemperatur.

Gemäß DE-OS 44 11 104 lassen sich Purpurpigmente auch herstellen, indem ein Trägermaterial und eine Goldverbindung in trockener Form gemischt und/oder gemahlen oder eine wäßrige Lösung oder Suspension einer Goldverbindung und ein Trägermaterial miteinander in Kontakt gebracht werden, wobei auch ein Fällungsmittel für eine lösliche Goldverbindung, etwa Ammoniak, anwesend sein kann, und anschließend das Gemisch bei einer Temperatur oberhalb der Zersetzungstemperatur der Goldverbindungen, aber unterhalb der Sintertemperatur des Trägermaterials thermisch behandelt wird, wobei die Goldverbindung in kolloidales Gold überführt wird. Gemäß DE-OS 44 11 103 können purpurfarbene Dekore auch unter Einsatz eines wie zuvor hergestellten, aber noch nicht thermisch behandelten und damit im wesentlichen noch farblosen Pigmentvorprodukts erzeugt werden. Bei den in den beiden letztgenannten Dokumenten beschriebenen Pigmenten beziehungsweise Pigmentvorstufen bedecken das farbgebende Metallkolloid beziehungsweise die Edelmetallverbindung ohne zusätzliches Oxidhydrat die Oberfläche des Trägermaterials. Derartige Pigmente beziehungsweise Pigmentvorstufen weisen bei einer Einbrenntemperatur von oberhalb 1000 °C eine unzureichende Farbbrillanz und mit zunehmender Brenntemperatur eine verminderte Farbtiefe auf.

Aus der US-PS 4,839,327 sind als Katalysatoren geeignete goldhaltige Produkte bekannt, welche aus einem feinverteilten Substrat, etwa einem Metalloxid oder Mischoxid, mit darauf befindlichen ultrafeinen Goldpartikeln mit einem Teilchendurchmesser von kleiner 500 nm bestehen. Das Herstellungsverfahren umfaßt zunächst eine Ausfällung von Goldhydroxid aus einer wasserlöslichen Goldverbindung auf dem Substrat in wäßriger Phase und dann eine Überführung des Goldhydroxids in kolloidales Gold durch eine Behandlung mit einem Reduktionsmittel oder durch thermische Behandlung. In diesem Dokument werden weder die Farbe des Produkts genannt noch seine Verwendung als Pigment angeregt. Die thermische Beständigkeit der nach diesem Verfahren erhältlichen Produkte entspricht nicht jener wie sie für den Hochtemperaturbrand, also insbesondere im Bereich von größer 1100 bis 1300 °C, gefordert wird.

Schließlich sind aus der GB-PS 1 436 060 Pigmente auf der Basis glasurstabiler Verbindungen, wie ZrSiO₄, SnO₂ oder Al₂O₃, und kolloidalem Gold bekannt. Die Herstellung erfolgt mittels einer Festkörperreaktion. Die Pigmente sind frei von Oxidhydraten; die Farbe ist wenig brillant und wirkt schmutzig.

Aufgabe der Erfindung ist die Bereitstellung von Pigmenten zur Erzeugung purpurfarbener keramischer Dekore mit verbesserter Hochtemperaturstabilität, wobei die Farbe des eingebrannten Dekors auf kolloidales Gold zurückzuführen ist. Die Pigmente sollten sich beim Hochtemperaturbrand, also bei oberhalb 1000 °C und insbesondere im Bereich von oberhalb 1100 bis etwa 1300 °C, anwenden lassen und bei gegebenem Goldgehalt im Pigment zu farbintensiveren Dekoren führen als unter Verwendung vorbekannter Pigmente auf der Basis eines in Gegenwart eines Trägermaterials ausgefällten Cassius'schen Goldpurpurs. Eine weitere Aufgabe richtet sich auf die Bereitstellung geeigneter Verfahren zur Herstellung der Pigmente.

Die Aufgabe wird gelöst durch ein Pigment, geeignet zur Erzeugung purpurfarbener keramischer Dekore beim Hochtemperaturbrand,
bestehend aus im wesentlichen (a) einem oder mehreren feinteiligen Trägermaterialien aus der Reihe einbrennfähiger Materialien, insbesondere Glasfritten, (b) einem oder mehreren Oxidhydraten eines oder mehrerer der Elemente aus der Reihe Al, Si, Sn, Pb, Ti, Zr, Nb, Ta, Sc, Y, La, Ce und Zn und (c) einer oder mehreren wasserunlöslichen Gold(III)- oder Gold(I)verbindungen oder kolloidalem Gold,
wobei Trägermaterial und Oxidhydrat, berechnet als Oxid, im Gewichtsverhältnis im Bereich von 10 bis 0,1 anwesend sind und der Goldgehalt des Pigments zwischen 0,05 bis 10 Gew.-% beträgt, und
erhältlich durch ein Verfahren, umfassend eine Copräzipitation des einen oder der mehreren Oxidhydrate und der wasserunlöslichen Goldverbindung(en) oder des kolloidalen Golds in Gegenwart des Trägermaterials in wäßriger oder wäßrig-organischer Phase in Abwesenheit eines Reduktionsmittels für die Goldverbindung(en), wobei eine oder mehrere lösliche Au-Verbindungen oder eine kolloidales Gold enthaltende Lösung und eine oder mehrere lösliche Verbindungen der im Oxidhydrat enthaltenen Metalle und mindestens ein Fällungsmittel eingesetzt werden und, sofern im Copräzipitat enthaltene wasserunlösliche Au-Verbindungen in kolloidales Gold überführt werden sollen, eine sich an die Copräzipitation anschließende Reduktion mittels eines üblichen Reduktionsmittels oder durch thermische Zersetzung bei 100 bis 300 °C.

Erfindungsgemäße Pigmente, welche eine Goldverbindung im Copräzipitat enthalten, sind meistens im wesentlichen farblos; sofern die Copräzipitation unter Mitverwendung eines wasserlöslichen Sulfids erfolgt, ist das Copräzipitat jedoch braun. Mindestens eine Goldverbindung enthaltende, im wesentlichen farblose oder gegebenenfalls braune Pigmente werden nachfolgend auch als nicht-reduzierte Pigmente bezeichnet. Der Begriff "im wesentlichen farblos" ist so zu verstehen, daß das nicht-reduzierte Pigment zwar eine vom Trägermaterial, dem Oxidhydrat und der gefällten Goldverbindung herrührende Eigenfarbe aufweisen kann, nicht jedoch eine Purpurfarbe, welche erst durch thermische Zersetzung der Goldverbindung während des Dekorbrandes oder durch einen chemischen Reduktionsschritt erhalten wird.

Üblicherweise sind die nicht-reduzierten Pigmente weiß, leicht gelblich oder gräulich oder, wie zuvor offenbart, auch braun. Erfindungsgemäße nicht-reduzierte Pigmente auf der Basis eines in Gegenwart eines Trägermaterials hergestellten Copräzipitats aus einem Oxidhydrat und einer Goldverbindung werden besonders bevorzugt, weil sie nicht nur am einfachsten herstellbar sind, sondern weil sie beim Hochtemperaturbrand bei gegebenem Goldgehalt zu farbintensiveren Purpurdekoren führen als erfindungsgemäße Pigmente, welche aufgrund des Einsatzes einer Lösung eines Goldkolloids oder aufgrund eines sich an die Copräzipitation anschließenden Reduktionsschritts eines eine Goldverbindung enthaltenden Copräzipitats kolloidales Gold enthalten und damit bereits selbst purpurfarben gefärbt sind. Bisher ist nicht geklärt, weshalb die nichtreduzierten, also eine Goldverbindung enthaltenden erfindungsgemäßen Pigmente temperaturstabiler, also nach einem Hochtemperaturdekorbrand farbintensiver sind als die kolloidales Gold enthaltenden erfindungsgemäßen Pigmente. Überraschenderweise ist die Temperaturstabilität beider erfindungsgemäßer Pigmenttypen viel höher als diejenige vorbekannter Pigmente ähnlicher Zusammensetzung und gleichem Goldgehalt. Die geringe Temperaturstabilität vorbekannter Pigmente verhinderte in der Praxis ihre Verwendung beim Hochtemperaturdekorbrand.

Die erfindungsgemäßen Pigmente bestehen im wesentlichen aus einem oder mehreren feinteiligen Trägermaterialien, einem oder mehreren Oxidhydraten und einer oder mehreren wasserunlöslichen Goldverbindungen oder kolloidalem Gold. Unter dem Begriff "im wesentlichen" ist zu verstehen, daß die Pigmente zusätzlich bis zu etwa 10 Gew.-% andere Stoffe, wie eine oder mehrere farbtonmodifizierende Metallverbindungen von Elementen aus der Reihe der Ag-, Cu-, Co-, Ni-, Ru-, Rh-, Pd-, Os-, Ir- und Pt-Verbindungen in einer Gesamtmenge unterhalb derjenigen der Goldverbindung enthalten können. Desweiteren kann in im wesentlichen farblosen Pigmenten in geringer aber wirksamer Menge ein organisches Pigment anwesend sein. Ein so eingefärbtes Pigment hat den Vorteil, daß ein damit hergestellter Druck vor dem Brand zuverlässig erkennbar ist. Schließlich können auch übliche Pigment-Hilfsmittel, wie Rieselhilfsmittel, anwesend sein.

Als Trägermaterial für die Pigmente dienen beim Dekorbrand einbrennfähige Materialien, wie feingemahlene Glasfritten, natürliche und synthetische Silikate, wie Alumosilikate, ferner Metalloxide und Mischoxide, etwa SiO₂, ZrO₂, SnO₂, TiO₂ und farblose Spinelle. Besonders bevorzugte Trägermaterialien sind feingemahlene Glasfritten. Glasfritten sind in chemisch unterschiedlichen Zusammensetzungen bekannt; die Zusammensetzung ist bestimmend für die Eigenschaften der Glasfritte, darunter des für die Anwendung wichtigen Schmelzverhaltens und des Ausdehnungskoeffizienten. Zur Herstellung von Purpurpigmenten, welche bei hoher Temperatur eingebrannt werden sollen, also bei einer Temperatur von oberhalb 1000 °C, insbesondere oberhalb 1100 bis etwa 1300 °C, wird der Fachmann eine solche Glasfritte auswählen, welche bei der beabsichtigten Brenntemperatur glatt ausschmilzt und die Farbentwicklung günstig beeinflußt. Zweckmäßigerweise liegt der mittlere Korndurchmesser im Bereich zwischen 1 und 10 µm, und bevorzugt sollten 90 % der Partikel kleiner 20 µm sein. Durch die Auswahl einer Glasfritte aus einem breitgefächerten, im Markt verfügbaren Angebot ist es möglich, den erfindungsgemäßen Pigmenten jeweils eine solche Glasfritte zugrundezulegen, welche am besten auf den zu dekorierenden Träger abgestimmt ist; damit werden Störungen, wie Abplatzen, Sprünge, Nadelstiche und Trübungen, im keramischen Dekor vermieden.

Unter den Begriff "Oxidhydrate" werden gelförmige Niederschläge verstanden, die bei der Ausfällung löslicher Verbindungen von Al, Si, Sn, Pb, Ti, Zr, Nb, Ta, Sc, Y, La, Ce und Zn in Form von Oxiden und/oder Hydroxiden aus wäßrigen Lösungen erhalten werden. In den löslichen Verbindungen sowie den Oxidhydraten sind Si, Sn, Ti, Zr und Ce vierwertig, Nb und Ta fünfwertig, Al, Sc, Y, La und gegebenenfalls auch Ce dreiwertig. Der Begriff "Oxidhydrate" schließt "oxidbildende Gele" und auch jene Niederschläge ein, wie sie bei der Trocknung der Niederschläge unter üblichen Bedingungen, im allgemeinen unter 100 °C, oder bei der erfindungsgemäß möglichen thermischen Behandlung bei 100 bis 300 °C zwecks Zersetzung der Goldverbindung erhalten werden.

Bevorzugte Oxidhydrate, welche bei der Copräzipitation gebildet werden, sind solche von Aluminium, Silicium, Zinn, Titan und Zirkonium; besonders bevorzugt werden Pigmente mit einem Oxidhydrat des vierwertigen Zinns.

Erfindungswesentlich ist, daß in den Pigmenten außer einer Goldverbindung oder kolloidalem Gold sowohl ein Trägermaterial als auch ein Oxidhydrat enthalten sind.

Trägermaterial und oxidhydratbildende lösliche Metallverbindungen werden im allgemeinen in einem solchen Verhältnis eingesetzt, daß im Pigment das Gewichtsverhältnis Trägermaterial zu Oxidhydrat, berechnet als Oxid, im Bereich zwischen 10 und 0,1 liegt. Ein bevorzugtes Gewichtsverhältnis liegt im Bereich von 10 bis 1, insbesondere 6 bis 2. Sofern die Copräzipitation in Abwesenheit eines Trägermaterials durchgeführt wird und das Trägermaterial anschließend mit dem Copräzipitat gemischt wird, gelangt man zu nicht-erfindungsgemäßen Pigmenten, welche beim Dekorbrand zwar auch eine Purpurfarbe entwickeln, deren Temperaturstabilität sowie Farbintensität aber wesentlich geringer ist als diejenige erfindungsgemäßer nicht-reduzierter Pigmente mit gleichem Goldgehalt.

Die erfindungsgemäßen nicht-reduzierten Pigmente enthalten eine in Wasser im wesentlichen unlösliche Gold(I)- oder Gold(III)verbindung oder ein Gemisch verschiedener unlöslicher Goldverbindungen, wie sie während der in Abwesenheit eines Reduktionsmittels für die Goldverbindungen ausgeführten Copräzipitation aus einer in Wasser oder in einem wäßrig-organischen homogenen Medium löslichen Gold (I)- oder vorzugsweise Gold(III)verbindung und dem Fällungsmittel erhalten werden. Als lösliche Goldverbindung können sowohl organische als auch anorganische Goldverbindungen eingesetzt werden. Geeignete lösliche Goldverbindungen sind solche aus der Reihe Lithium-, Natrium- und Kaliumdicyanoaurat (I), Tetrahalogengold(III)säure und Hydrate davon, insbesondere Tetrachlorogoldsäure und Hydrate davon, Lithium-, Natrium- und Kaliumdisulfitoaurat(I), Alkalimetalldithiosulfatoaurat(I), Gold(I)dithiolate, insbesondere solche wasserlöslicher Mercaptocarbonsäuren und Mercaptoaminosäuren. Da die Copräzipitation unter Verwendung von üblicherweise alkalisch wirkenden Fällungsmitteln erfolgt, wie insbesondere Alkalimetallhydroxid, Alkalimetallcarbonat, Alkalimetallsulfid und wäßrigem oder gasförmigem Ammoniak, handelt es sich bei den im wesentlichen wasserunlöslichen Gold(I)- als auch Gold(III)verbindungen um Goldoxide beziehungsweise Hydroxide sowie Goldamminhydroxide und Goldsulfide. Da Tetrachlorogoldsäure eine besonders bevorzugte wasserlösliche Goldverbindung ist und Natronlauge oder wäßriger Ammoniak ein besonders bevorzugtes Fällungsmittel, handelt es sich bei den im wesentlichen wasserunlöslichen Goldverbindungen in den nicht-reduzierten Pigmenten um Gold(III)hydroxid sowie um Goldamminhydroxide. Als weiteres Fällungsmittel kann ein wasserlösliches Sulfid oder Hydrogensulfid eingesetzt werden, beispielsweise Ammoniumsulfid oder Natriumsulfid, allein oder vorzugsweise in Kombination mit anderen Basen, wie Natronlauge.

Kolloidales Gold in wäßriger oder wäßrig-organischer Phase läßt sich in bekannter Weise durch Reduktion einer löslichen Goldverbindung herstellen. Im Handbuch der präparativen anorganischen Chemie von G. Brauer 3. Auflage, Band II, Seite 1011 wird die Reduktion von HAuCl₄ in siedendem Wasser mit Formaldehyd als Reduktionsmittel und K₂CO₃ als Säureakzeptor beschrieben; zudem wird durch Literaturhinweise auf weitere Darstellungsmöglichkeiten hingewiesen. G. Frens untersuchte Goldkolloide, welche nach der Citratmethode hergestellt wurden - siehe Nature Physical Science Vol. 241 (1973), 20-22. Eine derart gewonnene wäßrige Lösung kolloidalen Golds wird bei der Copräzipitation erfindungsgemäßer kolloidales Gold enthaltender Pigmente eingesetzt.

Der Goldgehalt erfindungsgemäßer Pigmente beträgt 0,05 bis 10 Gew.-%, vorzugsweise 0,5 bis 5 Gew.-%. Pigmente mit einem Goldgehalt zwischen 0,5 und 2,5 Gew.-% sind besonders bevorzugt.

Da bisher nicht erklärlich ist, weshalb die erfindungsgemäßen nicht-reduzierten Pigmente als auch die erfindungsgemäßen reduzierten oder unmittelbar kolloidales Gold enthaltenden Pigmente beim Dekorbrand eine wesentlich höhere Temperaturstabilität aufweisen als vorbekannte Pigmente ähnlicher Zusammensetzung, lassen sich die erfindungsgemäßen Pigmente durch das Verfahren kennzeichnen. Wesentlicher Verfahrensschritt ist die Copräzipitation des einen oder der mehreren Oxidhydate mit der/den Goldverbindung(en) oder des kolloidalen Golds in Gegenwart eines Trägermaterials in wäßriger oder wäßrigorganischer Phase. Erfindungswesentlich ist, daß bei der Copräzipitation kein Reduktionsmittel zur Reduktion der Goldverbindung(en) zu kolloidalem Gold anwesend ist. Sofern die bei der Copräzipitation erhaltenen, mindestens eine Goldverbindung enthaltenden Pigmente, in purpurfarbene Pigmente mit kolloidalem Gold überführt werden sollen, ist dies durch eine sich an die Copräzipitation anschließende Reduktion unter Verwendung üblicher Reduktionsmittel oder durch thermische Zersetzung der Goldverbindung im Pigment bei 100 bis 300 °C möglich. Gegenüber der chemischen Reduktion wird die thermische Zersetzung weniger bevorzugt.

Die erfindungsgemäßen Pigmente lassen sich demgemäß dadurch herstellen, daß man in wäßriger oder wäßrig-organischer Phase in Gegenwart eines oder mehrerer darin suspendierter feinteiliger Trägermaterialien aus der Reihe einbrennfähiger Materialien in Abwesenheit eines Reduktionsmittels für Goldverbindungen, eine Copräzipitation eines oder mehrerer Oxidhydrate eines oder mehrerer der Elemente aus der Reihe Al, Si, Sn, Pb, Ti, Zr, Nb, Ta, Sc, Y, La, Ce und Zn und einer oder mehrerer im wesentlichen wasserunlöslicher Gold (III)- oder Gold(I)verbindung(en) oder eingesetzten kolloidalen Golds durchführt, wobei man eine oder mehrere lösliche Verbindungen der im Oxidhydrat enthaltenden Metalle, eine oder mehrere wasserlösliche Goldverbindungen oder eine kolloidales Gold enthaltende Lösung und ein oder mehrere Fällungsmittel in einer solchen Menge einsetzt, im Pigment ein Gewichtsverhältnis von Trägermaterial zu Oxidhydrat, berechnet als Oxid, im Bereich von 10 bis 0,1 , insbesondere 10 bis 1, und ein Goldgehalt im Bereich von 0,05 bis 10 Gew.-%, insbesondere 0,5 bis 5 Gew.-% resultiert, und daß man anschließend das Copräzipitat von der flüssigen Phase abtrennt und trocknet oder, sofern im Copräzipitat enthaltene unlösliche Goldverbindungen in kolloidales Gold überführt werden sollen, entweder das Copräzipitat in wäßriger Phase mit einem Reduktionsmittel behandelt, anschließend von der wäßrigen Phase abtrennt und trocknet oder das getrocknete Copräzipitat bei 100 bis 300 °C thermisch behandelt.

Bei der Copräzipitation können außer den erfindungswesentlichen Komponenten, also einem oder mehreren Trägermaterialien, einer oder mehreren oxidhydratbildenden Metallverbindungen und einer oder mehreren löslichen Goldverbindung oder einer Lösung kolloidalen Golds auch wasserlösliche farbtonmodifizierende Verbindungen von Ag, Cu, Co, Ni, Ru, Rh, Pd, Os, Ir und Pt zugegen sein. Diese farbtonmodifizierenden Komponenten fallen während der Copräzipitation ebenfalls im wesentlichen als Hydroxide oder Oxidhydrate aus.

Die Copräzipitation wird in wäßriger oder wäßrigorganischer Phase durchgeführt. Sofern organische Lösungsmittel anwesend sind, handelt es sich um wasserlösliche organische Lösungsmittel, wie wasserlösliche Alkohole, Ketone und Ether. Vorzugsweise erfolgt die Copräzipitation in wäßriger oder zumindest überwiegend wäßriger Phase. Im allgemeinen werden wasserlösliche organische Lösungsmittel nur dort verwendet, wo eine der Reaktionskomponenten, beispielsweiese die Goldverbindung oder eine oxidhydratbildende Verbindung, nicht ausreichend wasserlöslich ist oder eine wäßrige Lösung dieser Verbindung nicht stabil ist. Die Copräzipitation wird üblicherweise bei einer Temperatur im Bereich von 5 bis 100 °C, insbesondere 15 bis 30 °C, unter intensivem Rühren durchgeführt.

Bei den im Verfahren eingesetzten löslichen Metallverbindungen handelt es sich um solche, welche in wäßriger oder wäßrig-organischer Phase durch Hydrolyse mit nachfolgender Kondensation und/oder durch Änderung des pH-Werts als Oxidhydrat beziehungsweise oxidbildendes Gel gefällt werden können. Geeignete lösliche Verbindungen sind beispielsweise Zinn(IV)chlorid und Hydrate davon, Zinn(IV)sulfat-dihydrat; AlCl₃, Al-acetat, Al-sulfat, Al-nitrat; Zr(IV)sulfat-tetrahydrat, Zr(NO₃)₄, Zirkonylchlorid-hydrate; Chloride, Nitrate oder Acetate von Scandium, Yttrium, Lanthan, Cer und Zink; wasserlösliche Silikate, insbesondere Wasserglas; Titanylsulfat. Eine bevorzugte Quelle für oxidbildende Gele von Si, Ti, Zr sind monomere und oligomere Alkoxyverbindungen dieser Elemente, wobei die Alkoxygruppen bevorzugt 1 bis 3 C-Atome aufweisen, und außer Alkoxygruppen zusätzlich OH-Gruppen und Sauerstoffbrücken zwischen zwei Metallatomen anwesend sein können. Beispiele sind Si(OC₂H₅)₄, Ti(OC₂H₅)₄, Zr(C₂H₅)₄, (HO)ₙ₋₃(C₂H₅)ₙSi-O-Si(C₂H₅)ₙ(OH)ₙ₋₃ mit n = 1, 2, 3.

Die Copräzipitation, bei welcher eine oder mehrere gelöste oxidhydratbildende Verbindungen, eine oder mehrere gelöste Gold(I)- oder vorzugsweise Gold(III)-verbindungen oder in Form einer Lösung eingesetztes kolloidales Gold und gegebenenfalls zusätzlich eine oder mehrere gelöste farbtonmodifizierende Verbindungen in wäßriger oder wäßrigorganischer Phase in Gegenwart eines darin suspendierten feinverteilten Trägermaterials mittels eines oder mehrerer Fällungsmittel ausgefällt werden, kann in unterschiedlicher Weise durchgeführt werden. Bei den Fällungsmitteln handelt es sich im allgemeinen um basische oder in wäßriger Phase basisch wirkende Verbindungen, insbesondere um ein Alkalimetallhydroxid oder um Ammoniak. Zweckmäßig kann die zusätzliche Verwendung von zum Beispiel einem wasserlöslichen Sulfid oder Hydrogensulfid sein. Mit diesen Fällungsmitteln ist der pH-Wert einfach einzustellen. Zusätzlich gewähren diese Fällungsmittel, daß sowohl die oxidhydratbildende(n) Verbindung(en) als auch die Goldverbindung(en) beziehungsweise das eingesetzte kolloidale Gold und gegebenenfalls farbtonmodifizierenden Verbindungen im wesentlichen gleichzeitig ausgefällt werden. Während der Copräzipitation werden die im Reaktionsgemisch suspendierten Partikel des Trägermaterials mit dem Copräzipitat umhüllt. Bei der Copräzipitation kann das Fällungsmittel in der das Trägermaterial enthaltenden Suspension vorgelegt werden und eine Lösung einer oxidhydratbildenden Verbindung und eine Lösung einer Goldverbindung oder kolloidalen Golds und gegebenenfalls eine Lösung farbtonmodifizierender Verbindungen oder ein Gemisch der genannten Lösungen in die Vorlage eingetragen werden. Die Mengenverhältnisse des/der alkalisch wirkenden Fällungsmittel und der in den einzutragenden Lösungen enthaltenen und/oder durch Hydrolyse oxidhydratbildender Verbindungen sich bildender Säuren werden so aufeinander abgestimmt, daß eine möglichst vollständige Copräzipitation erzielt wird. Der pH-Wert am Ende der Copräzipitation kann hierbei sowohl im sauren als auch alkalischen Bereich liegen, etwa im Bereich von 0,5 bis 12. Wie aus den Beispielen hervorgeht, sind End-pH-Werte im Bereich von etwa 0,5 bis etwa 10,5 bevorzugt. Außer durch den pH-Wert läßt sich die Copräzipitation auch durch die Temperatur steuern. Gemäß einer alternativen Ausführungsform der Copräzipitation kann in eine das Trägermaterial und eine gelöste Goldverbindung oder kolloidales Gold enthaltende Suspension gleichzeitig eine Lösung einer oxidhydratbildenden Verbindung und eine wäßrige Lösung des Fällungsmittels oder einer Kombination von Fällungsmitteln eingetragen werden. Gemäß einer weiteren Alternative kann in eine das Trägermaterial, eine gelöste Goldverbindung oder kolloidales Gold und eine gelöste oxidhydratbildende Verbindung enthaltende Suspension eine Lösung des Fällungsmittels eingetragen werden. Bei der Auswahl der Herstellungsvariante der Copräzipitation unter Einsatz einer Lösung kolloidalen Golds ist zu beachten, daß kolloidales Gold empfindlich auf den Elektrolytgehalt reagieren und damit die Partikelgröße der Au-Partikel und damit die Farbe beeinflußt werden kann. Nach der üblicherweise unter intensivem Rühren durchgeführten Copräzipitation kann das so erhaltene Copräzipitat vom flüssigen Reaktionsmedium abgetrennt, gewaschen und in üblicher Weise getrocknet werden.

Zur Herstellung von kolloidales Gold enthaltenden Pigmenten kann ein eine unlösliche Goldverbindung enthaltendes Copräzipitat vor oder vorzugsweise nach seiner Abtrennung vom flüssigen Reaktionsmedium unter Einsatz eines üblichen Reduktionsmittels für die Goldverbindung, gegebenenfalls in Anwesenheit farbtonmodifizierender Verbindungen, behandelt werden. Die Reduktion erfolgt üblicherweise in wäßrigem Medium bei Raumtemperatur oder mäßig erhöhter Temperatur. Beispiele für wirksame Reduktionsmittel sind Sulfite, Thiosulfate, Dithionite, Nitrite, Phosphite, Hypophosphite sowie die den genannten Salzen zugrundeliegenden Säuren, Hyponitrite und H₂N₂O₂, Oxohyponitrite und H₂N₂O₃, Hydrazin, Hydroxylamin und Salze davon, Wasserstoffperoxid, Metallhydride und komplexe Metallhydride sowie Aldehyde, wie insbesondere Formaldehyd, Urotropin und Glucose. Das Reduktionsmittel wird vorzugsweise in überstöchiometrischer Menge zur Reduktion der Goldverbindung und gegebenenfalls farbtonmodifizierenden Verbindungen erforderlichen Menge eingesetzt. Das reduzierte Pigment wird vom wäßrigen Reaktionsmedium abgetrennt und getrocknet.

Anstelle der Überführung der Goldverbindung(en) in einem Copräzipitat in kolloidales Gold unter Verwendung von Reduktionsmitteln ist es auch möglich, diese Überführung durch thermische Zersetzung der Goldverbindung durchzuführen. Zu diesem Zweck wird das nicht-reduzierte Copräzipitat bei 100 bis 300 °C thermisch behandelt, wobei diese Behandlung vorzugsweise in einem Wirbelschichtreaktor durchgeführt wird. Bei der thermischen Behandlung bis 300 °C ist die Überführung des Oxidhydrats in hydroxylgruppenfreies Oxid noch nicht abgeschlossen. Erfindungsgemäße Pigmente, welche kolloidales Gold enthalten, lassen sich außer durch die zuvor genannte chemische Reduktion des Copräzipitats oder durch thermische Behandlung desselben durch direkten Einsatz einer Lösung kolloidalen Golds in der Copräzipitation erhalten. Diese Ausführungsform führt zu einem geringeren Reduktionsmittelbedarf und einer höheren Raum-Zeit-Ausbeute als das einen Reduktiosschritt nach der Copräzipitation umfassende Verfahren.

Die erfindungsgemäßen Pigmente lassen sich in gleicher Weise wie vorbekannte Pigmente zur Einfärbung von Glasuren, Emaillen, Kunststoffen, Glas- und Dekorfarben und damit auch zur Herstellung purpurfarbener keramischer Dekore verwenden. Zur Einfärbung von Kunststoffen eignen sich bevorzugt die purpurfarbenen reduzierten Pigmente. Es können auf den jeweiligen Anwendungszweck speziell abgestimmte Pigmente herangezogen werden - für Glasfarben also Pigmente auf der Basis niedrig schmelzender Fritten, für Porzellanfarben und Schnellbrandfarben sowie Farben für Wandfließen solche auf der Basis höher schmelzender Fritten. Durch das an die Glasfritte der Glasuren und Emaillen angepaßte Pigment wird das Fließverhalten der Glasuren und Emaillen nicht verändert. Zur Dekoration wird üblicherweise das Pigment mit einem flüssigen Medium angepastet, die Paste mittels Siebdruck auf einen Abziehbildträger aufgedruckt und das Abziehbild in bekannter Weise überfilmt. Das Abziehbild wird in an sich bekannter Weise auf den zu dekorierenden Träger übertragen und anschließend eingebrannt. Die Brenntemperaturen richten sich nach dem zu dekorierenden Material. Während der Dekorbrand auf keramischen Trägermaterialien bisher überwiegend im Bereich zwischen 800 und 900 ° erfolgte, besteht derzeit ein zunehmendes Interesse an einem sogenannten Hochtemperaturschnellbrand, wobei die Pigmente bei einer Temperatur oberhalb 1000 °C, insbesondere oberhalb 1100 bis etwa 1250 °C eingebrannt werden.

Der wesentliche Vorteil der erfindungsgemäßen Pigmente besteht darin, daß sie eine höhere Hochtemperaturstabilität aufweisen und daher farbintensivere und brillantere Dekore erhältlich sind als unter Verwendung ähnlich gearteter vorbekannter Pigmente, die zudem oft zu opaken und matten Dekoren führen. Die Hochtemperaturstabilität zeichnet sich dadurch aus, daß die Pigmente auch bei zunehmender Brenntemperatur weniger stark verblassen, als dies bei den vorbekannten Pigmenten der Fall ist. Ein weiterer Vorteil der eine Goldverbindung enthaltenden erfindungsgemäßen Pigmente besteht darin, daß diese in besonders einfacher Weise erhältlich sind und einen Reduktionsschritt überflüssig machen, da die eigentliche Reduktion der Goldverbindung zu kolloidalem Gold erst während des Brands erfolgt. Durch die Auswahl des Trägermaterials und der oxidhydratbildenden Verbindung lassen sich unterschiedliche Pigmente mit unterschiedlichen Farbtönungen erhalten.

Die Erfindung wird anhand der nachfolgenden Beispiele näher erläutert. Die Beispiele umfassen sowohl die Herstellung und Verwendung erfindungsgemäßer Pigmente als auch zu Vergleichszwecken die Verwendung von nach vorbekannten Verfahren hergestellten Pigmenten.

### Beispiel 1

In einem Becherglas wurden 525 g einer Hochtemperaturschnellbrand(HTS)-Fritte (Nr. 90234 der Fa. Cerdec AG, bestehend im wesentlichen aus SiO₂, PbO, CaO, B₂O₃ und SnO₂; Korngrößenverteilung 90 % kleiner als 10 µm), 1000 ml konzentrierte Ammoniaklösung und 1700 ml Wasser gegeben. Unter Rühren wurde anschließend innerhalb 15 min eine Lösung (pH <1) aus 305 g Zinntetrachloridpentahydrat
(SnCl₄ ^{.} 5 H₂O) und Tetrachlorogoldsäurehydrat (HAuCl₄ ^{.} H₂O) in einer Menge entsprechend 8,8 g Gold in 1250 ml Wasser tropfenweise zugegeben. Die Zugabe erfolgte bei Raumtemperatur, der pH sank während der Zugabe von 12,5 auf 9. Das entstandene, im wesentlichen ungefärbte und nicht-reduzierte Pigment wurde abfiltriert, gewaschen und bei 60 °C getrocknet. Das rechnerisch ermittelte Gewichtsverhältnis der Glasfritte zu dem dem Oxidhydrat zugrundeliegenden Oxid, hier als SnO₂, betrug 4. Der Goldgehalt im Pigment betrug 1,34 Gew.-%, bezogen auf die Summe aus Glasfritte plus SnO₂.

Das erhaltene Pigment wurde mit einem Druckmedium (80820 der Fa. Cerdec AG) angepastet (56 Gewichtsteile Pigment und 44 Gewichtsteile Medium) und nach bekannter Technik durch indirekten Siebdruck auf eine glasierte Porzellanoberfläche appliziert und bei 1220 °C 30 min lang eingebrannt. Es zeigte sich die typische Purpurfarbe; mit einem Hunter-Lab-Spektralphotometer wurden die Farbwerte gemessen und in L*, a* und b* des CIE-Lab-Systems (DIN 5033, Teil 3) umgerechnet:
L = 38; a = 29; b = 3,1 (Hunter)
L* = 45,8; a* = 34,9; b* = -3,9 (CIE-Lab)

Die zuvor erhaltene gefärbte Porzellanoberfläche wurde zur Untersuchung der Rückbrandstabilität ein zweites Mal bei 1220 °C 30 min lang eingebrannt. Es zeigte sich keine visuell erfaßbare Veränderung der Farbe.
L = 38,6; a = 29,3; b = 3,26 (Hunter)
L* = 45,5; a* = 34,3; b* = -4,2 (CIE-Lab)

### Beispiel 2

Eine Suspension von 100 ml Ammoniaklösung 32 %ig, 100 ml Wasser, 0,1 g AgCl (zur Farbtonmodifizierung) und 17,5 g einer bleifreien Glasfritte (Nr. 10150 der Fa. Cerdec AG) mit den Hauptbestandteilen SiO₂, B₂O₃ und Na₂O wurde vorgelegt. Unter Rühren wurde in die Suspension eine Lösung aus 25 g SnCl₄ ^{.} 5 H₂O und HAuCl₄ ^{.} H₂O entsprechend 0,6 g Gold in 200 ml Wasser tropfenweise zugegeben. Der End-pH-Wert betrug 8,5. Das entstandene Pigment wurde abfiltriert, gewaschen und bei 60 °C getrocknet. Das Gewichtsverhältnis Glasfritte zu SnO₂ betrug 1,6 , der Goldgehalt, bezogen auf die Summe aus Fritte plus SnO₂, 2,1 Gew.-%. Die Farbwerte nach dem Indirektdruck auf glasiertem Porzellan und 30 Minutenbrand bei 1220 °C betrugen (CIE-Lab):
L* = 42,7; a* = 20,4; b* = -6,9.

### Beispiel 3

Eine Suspension aus 200 ml Wasser, 150 ml einer 5 %ige NaOH-Lösung und 10 g einer bleifreien Glasfritte (Nr. 10150 der Fa. Cerdec AG) wurde vorgelegt. Unter Rühren wurde in die Suspension eine Lösung aus 17,5 g Zinntetrachlorid und 0,2 g Gold in Form von HAuCl₄ ^{.} H₂O in 50 ml Wasser tropfenweise zugegeben. Das entstandene Pigment wurde abfiltriert, gewaschen und bei 60 °C getrocknet. Das Gewichtsverhältnis Fritte zu SnO₂ betrug 1,3 , der Goldgehalt 1,14 Gew.-%, bezogen auf die Summe aus Fritte plus SnO₂.

Die CIE-Lab-Werte des Pigments nach Einbrennen auf glasiertem Porzellan bei 1220 °C und 30 min betrugen:
L* = 38,8; a* = 32,1; b* = -5,7.

### Beispiel 4

Eine Suspension von 100 ml Wasser, 27 g ZrOCl₂ ^{.} 8 H₂O, 0,1 g Gold in Form von HAuCl₄ ^{.} H₂O und 10 g einer bleifreien Glasfritte (Nr. 10150 der Fa. Cerdec AG) wurde vorgelegt. Unter Rühren wurde in die Suspension eine Lösung aus 20 g Natriumwasserglas und 35 ml 5 molare Natronlauge in 100 ml Wasser tropfenweise zugegeben. Das entstandene Pigment wurde abfiltriert, gewaschen und bei 60 °C getrocknet. Anschließend wurde wie üblich indirekt gedruckt und eingebrannt. Die CIE-Lab-Farbwerte betrugen:
L* = 52,0; a* = 27,7; b* = +5,8.

### Beispiel 5

Eine Suspension von 100 ml Wasser, 60 ml einer konzentrierten Ammoniaklösung und 30 g Quarzpulver (SiO₂) wurde vorgelegt. Unter Rühren wurde in die Suspension eine Lösung aus 17,5 g Zinntetrachlorid ^{.} 5 H₂O und 0,2 g Gold in Form von HAuCl₄ ^{.} H₂O in 80 ml Wasser tropfenweise zugegeben. Der End-pH-Wert war kleiner 10. Das entstandene Pigment wurde abfiltriert, gewaschen und bei 60 °C getrocknet. Das Pigment wurde wie üblich angepastet, auf glasiertes Porzellan appliziert und 30 min bei 1220 °C eingebrannt. Die Farbwerte nach CIE-Lab waren: L* = 61,8; a* = 11,8; b* = -2,1. Das Verhältnis SiO₂ zu SnO₂ betrug 4, der Goldgehalt, bezogen auf SiO₂ plus SnO₂ 0,53 Gew.-%.

### Beispiel 6

Das nach Beispiel 1 erhaltene Pigment wurde mit 0,01 % Permanentrot (Fa. Hoechst) vermischt. Man erhielt so ein Pigmentpulver mit ähnlicher Farbe wie der spätere Ausbrand. Das Pulver wurde analog zu Beispiel 1 auf eine glasierte Porzellanoberfläche appliziert und eingebrannt (1220 °C, 30 min). Es zeigte sich kaum ein Unterschied zu dem nach Beispiel 1 erhaltenen Ergebnis: L* = 48,2; a* = 33,3; b* = -4,1.

### Beispiel 7

In eine Suspension aus 0,18 g NaAuCl₄ (=0,1 g Au), 9 g ZrO₂, 25 ml Ethanol und 25 ml konzentrierte Salzsäure wurden unter Rühren 50 ml Tetraethylortosilikat zugegeben. Diese Mischung wurde 5 h gerührt und anschließend im Trockenschrank bei 60 °C getrocknet. Man erhielt ein grauviolettes Pigment.

### Beispiel 8

In ein Becherglas wurden 26 g einer Hochtemperaturschnellbrand(HTS)-Fritte (Nr. 10150 der Fa. Cerdec AG), 20 ml konzentrierte Ammoniaklösung und 100 ml Wasser gegeben. Unter Rühren wurde anschließend eine Lösung aus 15,3 g Zinntetrachloridpentahydrat und 0,36 g HAuCl₄ ^{.} H₂O (= 0,2 g Au) in 60 ml Wasser tropfenweise zugegeben. Die erhaltene hellgelbe Suspension wurde mit 160 ml einer 5 gew.-%igen H₃PO₂-Lösung versetzt und 2 h lang auf 80 °C erhitzt. Hierbei zeigte die Suspension nach einiger Zeit die für Purpurfarben typische Färbung. Das entstandene Pigment wurde abfiltriert, gewaschen und bei 60 °C getrocknet. Das Gewichtsverhältnis Fritte zu SnO₂ betrug 4, der Goldgehalt (bezogen auf Fritte plus SnO₂) 0,61 Gew.-%. Nach üblicher Applikation und Brand (1220 °C, 30 min) lauteten die CIE-Lab-Werte: L* = 53,6; a* = 28; b* = -4,2.

### Beispiel 9

5 g des nach Beispiel 1 erhaltenen Pigments wurden in 50 ml Wasser suspendiert. Unter Rühren wurden anschließend 10 ml einer 8 gew.-%igen Hydraziniumhydroxidlösung zugegeben und 1 h gerührt. Hierbei färbte sich die Suspension grau. Das entstandene purpurfarbene Pigment wurde abfiltriert, gewaschen und bei 60 °C getrocknet und anschließend nach bekannter Technik durch indirekten Siebdruck auf eine Porzellanoberfläche appliziert und bei 1220 °C 30 min lang eingebrannt. Es zeigten sich die typischen CIE-Lab-Werte für eine Purpurfarbe: L* = 42,7; a* = 28,1; b* = -5,1.

### Beispiel 10

5 g des nach Beispiel 1 erhaltenen Pigments wurden in 50 ml Wasser suspendiert. Unter Rühren wurden anschließend 10 ml einer 5 gew.-%igen H₃PO₂-Lösung zugegeben und 1 h bei 80 °C gerührt. Hierbei färbte sich die Suspension blauviolett. Das entstandene Pigment wurde abfiltriert, gewaschen und bei 60 °C getrocknet und anschließend nach bekannter Technik durch indirekten Siebdruck auf eine Porzellanoberfläche appliziert und bei 1220 °C 30 min lang eingebrannt. Es zeigte sich die typische Purpurfarbe. Hunter-Farbwerte: L = 30; a = 31; b = -2, entsprechend CIE-Lab-Werte: L* = 36,0; a* = 38,0; b* = -2,8.

### Beispiel 11

Das nach Beispiel 1 erhaltene Pigment wurde in einer Wirbelschicht 2 h bei 250 °C thermisch behandelt. Man erhielt ein grauviolettes Pigment. Das erhaltene Pigment wurde nach bekannter Technik durch indirekten Siebdruck auf eine Porzellanoberfläche appliziert und bei 1220 °C 30 min lang eingebrannt. Es zeigte sich die typische Purpurfarbe. Die Hunter-Farbwerte lauteten: L = 38,8; a = 18,5; b = -1,9 , entsprechend CIE-Lab-Werte: L* = 45,5; a* = 22,6; b* = -2,4.

### Beispiel 12

Untersucht wurden (i) der Einfluß des Gewichtsverhältnisses Trägermaterial zu Oxidhydrat, berechnet als Oxid, und (ii) der Einfluß der Brenntemperatur. Die Herstellung der nicht-reduzierten Pigmente erfolgte analog Beispiel 1. Eingesetzt wurden als Trägermaterial eine Hochtemperaturschnellbrandfritte (Nr. 10150 der Fa. Cerdec AG), SnCl₄ ^{.} 5 H₂O als oxidhydratbildende Verbindung und HAuCl₄ ^{.} H₂O als lösliche Goldverbindung. Das Gewichtsverhältnis Glasfritte zu SnO₂ betrug 4. Der Goldgehalt (bezogen auf Fritte plus SnO₂) sämtlicher Pigmente betrug 1,3 Gew.-%. Die Pigmente wurden nach der Copräzipitation gewaschen und getrocknet (bei 60 °C) und anschließend analog Beispiel 1 angepastet, die Paste durch indirekten Siebdruck auf eine glasierte Porzellanoberfläche appliziert und bei 1220 °C 30 min lang eingebrannt.

Die L*a*b*-Werte nach DIN 5033 (Teil 3) folgen aus der Tabelle. Hieraus folgt, daß (i) die Farbwerte nur in geringem Umfang vom Verhältnis Trägermaterial zu Oxidhydrat, berechnet als Oxid, abhängen und (ii) die Pigmente eine hohe Temperaturstabilität aufweisen, das heißt, sie verblassen nur wenig, wenn sie anstelle bei 1140 °C oder 1180 °C bei 1220 °C eingebrannt werden.

**Tabelle**

| Brenntemperatur | Gewichtsverhältnis Fritte zu Oxidhydrat, ber. als Oxid | CIE-Lab | | |
|---|---|---|---|---|
| | | L* | a* | b* |
| 1140 °C | 9 | 38,6 | 27,1 | -1,6 |
| | 4 | 37,8 | 31,0 | -1,9 |
| | 2,3 | 38,6 | 27,6 | -1,8 |
| | 1,5 | 40,6 | 26,7 | -2,1 |
| | 1 | 40,4 | 27,6 | -2,1 |
| 1180 °C | 9 | 39,6 | 24,3 | -1,0 |
| | 4 | 39,5 | 27,5 | -1,8 |
| | 2,3 | 39,5 | 26,3 | -1,9 |
| | 1,5 | 41,2 | 25,2 | -2,3 |
| | 1 | 38,9 | 27,9 | -1,9 |
| 1220 °C | 9 | 45,7 | 19,2 | +0,8 |
| | 4 | 41,1 | 23,3 | -0,4 |
| | 2,3 | 42,7 | 21,7 | 0,0 |
| | 1,5 | 44,3 | 21,2 | -1,8 |
| | 1 | 42,2 | 23,0 | -2,5 |

### Beispiel 13

Durchgeführt wurde analog Beispiel 1 die Copräzipitation unter Einsatz von SnCl₄ ^{.} 5 H₂O und HAuCl₄ ^{.} H₂O, jedoch in Abwesenheit einer Fritte. Die Fritte wurde nachträglich zugemischt.

Die Zusammensetzung entsprach Beispiel 1 mit 1,34 Gew.-% Au und einem Gewichtsverhältnis von Fritte zu Oxidhydrat, berechnet als Oxid von 4. Die L*a*b*-Werte folgen aus der Tabelle.

| | CIE-Lab | | |
|---|---|---|---|
| | L* | a* | b* |
| Beispiel 1 (erfindungsgemäß) | 45,8 | 34,9 | -3,9 |
| Beispiel 13 (nicht-erfindungsgemäß) | 73,6 | 8,6 | -2,1 |

### Beispiel 14

Reduzierte Pigmente: Untersucht wurde der Einfluß der Einsatzmenge Reduktionsmittel bei der Reduktion von je 10 g des nach Beispiel 1 erhaltenen nicht-reduzierten Pigments. Die Farbwerte der Pigmente lauteten nach üblicher Applikation und Brand:

| | | 1 ml H₃PO₂ (50 %ig) | 10 ml H₃PO₂ (50 %ig) |
|---|---|---|---|
| L* | | 36,0 | 54,5 |
| a* | CIE-Lab | 38,5 | 15,9 |
| b* | | -2,5 | -2,3 |

### Beispiel 15

a) In einem Becherglas wurden 17,5 g einer HochtemperaturSchnellbrand(HTS)-Fritte (Nr. 90234 der Fa. Cerdec AG), 10 ml Ammoniaklösung 25 %ig und 60 ml Wasser vorgelegt. Unter Rühren wurde anschließend innerhalb von 10 min. eine Lösung aus 10,18 g Zinntetrachloridpentahydrat (SnCl₄ ^{.} 5 H₂O), 0,29 g Au, in Form von Tetrachlorogoldsäure, und 50 ml Wasser tropfenweise zugegeben. Die Zugabe erfolgte bei Raumtemperatur, der pH-Wert sank während der Zugabe von 11,8 auf 3,3. Das entstandene weiße Copräzipitat wurde abfiltriert, gewaschen und bei 70 °C getrocknet. Das erhaltene Pigment, das unmittelbar eine Dekorfarbe darstellt, wurde mit einem Druckmedium (80820 der Fa. Cerdec AG) angepastet (56 Gewichtsteile Pigment und 44 Gewichtsteile Medium), nach bekannter Technik durch indirekten Siebdruck (Siebgewebe 100 T) auf eine glasierte Porzellanoberfläche appliziert und bei 1220 °C und einem 90-Minuten-Brennzyklus im Gas-Durchschubofen eingebrannt. Mit einem Hunter-Lab-Spektralphotometer wurden die Farbwerte gemessen und in L*, a* und b* des CIE-Lab-Systems (DIN 5033, Teil 3) umgerechnet:
L* = 82,15; a* = 6,56; b* = -1,77
b) und c):
Beispiel 15a wurde mit dem Unterschied wiederholt, daß die bei der Copräzipitation eingesetzte Menge Ammoniaklösung bei konstanter Ansatzgröße erhöht wurde. Die NH₃-Einsatzmengen und die pH-Werte zu Beginn und am Ende, ferner die L*a*b*-Werte der eingebrannten Pigmente folgen aus der Tabelle:

| Beispiel-Nr. | 15 a | 15 b | 15 c |
|---|---|---|---|
| ml NH₃-Lösung (25 %ig) | 10 | 20 | 40 |
| pH Start | 11,8 | 12,1 | 12,5 |
| pH Ende | 3,3 | 9,6 | 10,3 |
| L* | 82,1 | 46,2 | 36,7 |
| a* | 6,6 | 25,9 | 29,3 |
| b* | -1,8 | -2,9 | -1,4 |

d), e) und f) :
Jeweils die Hälfte des gemäß den Beispielen 15a bis 15c hergestellten Copräzipitats wurde als feuchter Filterkuchen mit 50 ml Wasser aufgenommen. Hierzu wurden jeweils 1 g Hypophosphorige Säure (50 %ig) gegeben und bei 80 °C unter Rühren 2 Stunden behandelt. Das jeweils entstandene purpurfarbene Copräzipitat wurde abfiltriert, gewaschen und bei 70 °C getrocknet. Analog den Beispielen 15a bis 15c wurde angedruckt und getrocknet. Die L*a*b*-Werte folgen aus der Tabelle:

| Beispiel-Nr. | 15 d | 15 e | 15 f |
|---|---|---|---|
| In der Reduktionsstufe eingesetztes Copräzipitat aus Beispiel-Nr. | 15 a | 15 b | 15 c |
| L* | 74,2 | 47,5 | 41,6 |
| a* | 15,1 | 25,5 | 24,8 |
| b* | -4,2 | -3,8 | -2,2 |

### Beispiel 16

In einem Becherglas wurden eine Lösung aus 10,18 g Zinntetrachloridpentahydrat (SnCl₄ ^{.} 5 H₂O), 0,29 g Gold, in Form von Tetraclorogoldsäure, und 50 ml Wasser sowie 17,5 g einer Hochtemperatur-Schnellbrand(HTS)-Fritte (Nr. 90234 der Fa. Cerdec AG) vorgelegt. Unter Rühren wurden anschließend innerhalb von 10 min. 0,49 g Natriumsulfid (≈ 35 %ig), gelöst in 12 ml 5molarer Natronlauge, tropfenweise zugegeben. Die Zugabe erfolgte bei Raumtemperatur, der pH-Wert stieg während der Zugabe von 0,15 auf 0,86 an. Das hierbei entstandene dunkelbraune Copräzipitat wurde abfiltriert, gewaschen und bei 70 °C getrocknet. Die erhaltene Dekorfarbe wurde wie üblich mit einem Druckmedium (80820 der Fa. Cerdec AG) angepastet (57 Gewichtsteile Pigment und 43 Gewichtsteile Medium), über indirekten Siebdruck mit einem Siebgewebe 100 T, auf eine glasierte Porzellanoberfläche appliziert und bei 1220 °C im 90-Minuten-Brennzyklus im Gas-Durchschubofen eingebrannt. Mit einem Hunter-Lab-Spektralphotometer wurden die Farbwerte gemessen und in L*, a* und b* des CIE-Lab-Systems umgerechnet:
L* = 58,49; a* = 15,24; b* = -0,90

### Beispiel 17

In einem Becherglas wurden 17,5 g einer bleihaltigen Hochtemperaturschnellbrand(HTS)-Fritte (Nr. 90234 der Fa. Cerdec AG; Korngrößenverteilung 90 % kleiner als 10 µm), 12 ml 5molare Natronlauge sowie 0,49 g Natriumsulfid (≈ 35 %ig), gelöst in 50 ml Wasser, vorgelegt. Zu dieser stark alkalischen Suspension von pH 13,30 wurde unter Rühren innerhalb von 10 min. eine Lösung aus 10,18 g Zinntetrachloridpentahydrat (SnCl₄ ^{.} 5 H₂O), 0,29 g Au, in Form von Tetrachlorogoldsäure, und 50 ml Wasser tropfenweise zugegeben. Die Zugabe erfolgte bei Raumtemperatur. Der pH-Wert betrug am Ende der Copräzipitation 1,1. Das entstandene braune Copräzipitat wurde abfiltriert, gewaschen und bei 70 °C getrocknet. Verdruckt und gebrannt lieferte diese Dekorfarbe folgende Farbwerte:
L* = 44,0; a* = 31,8; b* = -4,9

Beim Vergleich der Farbwerte der Beispiele 15, 16 und 17 wird deutlich, daß bei gleichem Trägermaterial und Oxidhydrat sowie gleichem Verhältnis Trägermaterial zu Oxidhydrat und gleichem Goldgehalt die Art der Copräzipitation und das Fällungsmittel einen maßgeblichen Einfluß auf die Farbe des Pigments (= Dekorfarbe) haben.

### Beispiel 18

In einem Becherglas wurden 17,5 g einer bleifreien Hochtemperaturschnellbrand(HTS)-Fritte (Nr. 901368 der Fa. Cerdec AG, bestehend aus im wesentlichen SiO₂, CaO, Al₂O₃, B₂O₃ und Na₂O; Korngrößenverteilung 90 % kleiner als 8 µm), 20 ml 5molare Natronlauge, 0,49 g Natriumsulfid (≈ 35 %ig), gelöst in 50 ml Wasser, vorgelegt. Innerhalb von 10 min. wurden unter Rühren eine Lösung aus 10,18 g Zinntetrachloridpentahydrat (SnCl₄ ^{.} 5 H₂O), 0,29 g Au, in Form von Tetrachlorogoldsäure, und 50 ml Wasser zugetropft. Der pH-Wert betrug am Ende der Copräzipitation 1,9. Das bei Raumtemperatur entstandene braune Copräzipitat wurde abfiltriert, gewaschen und bei 70 °C getrocknet. Verdruckt und gebrannt lieferte dieses Pigment, das unmittelbar als Dekorfarbe getestet wurde, folgende Farbwerte:
L* = 47,6; a* = 29,0; b* = -4,5

### Beispiel 19

In einem Becherglas wurden 25 g einer Hochtemperaturschnellbrand(HTS)-Fritte (Nr. 90234 der Fa. Cerdec AG, bestehend aus SiO₂, PbO, CaO, B₂O₃ und SnO₂; Korngrößenverteilung 90 % kleiner als 10 µm), 50 ml konzentrierte Ammoniaklösung und 200 ml Wasser vorgelegt. Unter Rühren wurde anschließend innerhalb 15 min ein Gemisch aus einer Lösung aus 17,5 g Zinntetrachloridpentahydrat (SnCl₄ ^{.} 5 H₂O) in 30 ml Wasser und 37 ml einer wäßrigen Goldkolloidlösung mit einem Au-Gehalt von 10 mg/ml, hergestellt aus HAuCl₄ durch Reduktion mit Formaldehyd, tropfenweise zugegeben. Die Zugabe erfolgte bei Raumtemperatur, der pH sank während der Zugabe von 12,5 auf 9. Das entstandene purpurfarbene Copräzipitat wurde abfiltriert, gewaschen und bei 60 °C getrocknet.

Das erhaltene Pigment mit einem Au-Gehalt von 1,13 Gew.-% wurde mit einem Druckmedium (80820 der Fa. Cerdec AG) angepastet (56 Gewichtsteile Pigment und 44 Gewichtsteile Medium) und nach bekannter Technik durch indirekten Siebdruck auf eine glasierte Porzellanoberfläche appliziert und bei 1220 °C 30 min lang eingebrannt. Mit einem Hunter-Lab-Spektralphotometer wurden die Farbwerte gemessen und in L*, a* und b* des CIE-Lab-Systems (DIN 5033, Teil 3) umgerechnet:
L* = 56,4; a* = 22,0; b* = -4,1 (CIE-Lab)

## Patentansprüche

1. Pigment, geeignet zur Erzeugung purpurfarbener keramischer Dekore beim Hochtemperaturbrand, bestehend aus im wesentlichen (a) einem oder mehreren feinteiligen Trägermaterialien aus der Reihe einbrennfähiger Materialien, insbesondere Glasfritten, (b) einem oder mehreren Oxidhydraten eines oder mehrerer der Elemente aus der Reihe Al, Si, Sn, Pb, Ti, Zr, Nb, Ta, Sc, Y, La, Ce und Zn und (c) einer oder mehreren wasserunlöslichen Gold (III)- oder Gold(I)verbindung oder kolloidalem Gold, wobei Trägermaterial und Oxidhydrat, berechnet als Oxid, im Gewichtsverhältnis im Bereich von 10 bis 0,1 anwesend sind und der Goldgehalt des Pigments zwischen 0,05 bis 10 Gew.-% beträgt, und
erhältlich durch ein Verfahren, umfassend eine Copräzipitation des einen oder der mehreren Oxidhydrate und der wasserunlöslichen Goldverbindung(en) oder des kolloidalen Golds in Gegenwart des Trägermaterials in wäßriger oder wäßrig-organischer Phase in Abwesenheit eines Reduktionsmittels für die Goldverbindung(en), wobei eine oder mehrere lösliche Au-Verbindungen oder eine kolloidales Gold enthaltende Lösung und eine oder mehrere lösliche Verbindungen der im Oxidhydrat enthaltenen Metalle und mindestens ein Fällungsmittel eingesetzt werden und, sofern im Copräzipitat enthaltene wasserunlösliche Au-Verbindungen in kolloidales Gold überführt werden sollen, eine sich an die Copräzipitation anschließende Reduktion mittels eines üblichen Reduktionsmittels oder durch thermische Zersetzung bei 100 bis 300 °C.

2. Pigment nach Anspruch 1,
dadurch gekennzeichnet,
daß es als Trägermaterial eine Glasfritte und als Oxidhydrat ein solches von Sn oder Zr, insbesondere von Sn, enthält, wobei das Gewichtsverhältnis Glasfritte zu Oxidhydrat, berechnet als Oxid, im Bereich von 10 bis 1 liegt.

3. Pigment nach Anspruch 1 oder 2,
dadurch gekennzeichnet,
daß es als Goldverbindung Gold(III)hydroxid, ein Gold(III)amminhydroxid oder Goldsulfid enthält und der Goldgehalt des Pigments zwischen 0,5 und 5 Gew.-% beträgt.

4. Pigment nach Anspruch 1 oder 2,
dadurch gekennzeichnet,
daß es kolloidales Gold in einer Menge von 0,5 bis 2,5 Gew.-% enthält, das durch Reduktion der im Copräzipitat enthaltenen wasserunlöslichen Goldverbindung, insbesondere Gold(III)-hydroxid oder Gold(III)amminhydroxid, unter Verwendung eines Reduktionsmittels aus der Reihe der Aldehyde, Hydrazin, Sulfite, Dithionite, Thiosulfate, Phosphite, Hypophosphorige Säure und Hypophosphite, erhalten wurde.

5. Pigment nach einem der Ansprüche 1 bis 4,
dadurch gekennzeichnet,
daß als Fällungsmittel ein oder mehrere aus der Reihe Alkalimetallhydroxid, Alkalimetallcarbonat, Alkalimetallsulfid und/oder Ammoniak verwendet wurden und der pH-Wert am Ende der Copräzipitation im Bereich von etwa 0,5 und etwa 10,5 betrug.

6. Verfahren zur Herstellung eines Pigments gemäß einem der Ansprüche 1 bis 5,
dadurch gekennzeichnet,
daß man in wäßriger oder wäßrig-organischer Phase in Gegenwart eines oder mehrerer darin suspendierter feinteiliger Trägermaterialien aus der Reihe einbrennfähiger Materialien in Abwesenheit eines Reduktionsmittels für Goldverbindungen eine Copräzipitation eines oder mehrerer Oxidhydrate eines oder mehrerer der Elemente aus der Reihe Al, Si, Sn, Pb, Ti, Zr, Nb, Ta, Sc, Y, La, Ce und Zn und einer oder mehrerer im wesentlichen wasserunlöslicher Gold(III)- oder Gold(I)verbindung(en) oder eingesetzten kolloidalen Golds durchführt, wobei man eine oder mehrere lösliche Verbindungen der im Oxidhydrat enthaltenden Metalle, eine oder mehrere wasserlösliche Goldverbindungen oder eine kolloidales Gold enthaltende Lösung und ein oder mehrere Fällungsmittel in einer solchen Menge einsetzt, daß im Pigment ein Gewichtsverhältnis von Trägermaterial zu Oxidhydrat, berechnet als Oxid, im Bereich von 10 bis 0,1 und ein Goldgehalt im Bereich von 0,05 bis 10 Gew.-% resultiert, und daß man anschließend das Copräzipitat von der flüssigen Phase abtrennt und trocknet oder, sofern im Copräzipitat enthaltene unlösliche Goldverbindungen in kolloidales Gold überführt werden sollen, entweder das Copräzipitat in wäßriger Phase mit einem Reduktionsmittel behandelt, anschließend von der wäßrigen Phase abtrennt und trocknet oder das getrocknete Copräzipitat bei 100 bis 300 °C thermisch behandelt.

7. Verfahren nach Anspruch 6,
dadurch gekennzeichnet,
daß man für die Copräzipitation ein oder mehrere Fällungsmittel aus der Reihe Alkalimetallhydroxid, Alkalimetallcarbonat, Alkalimetallsulfid und Ammoniak verwendet, wobei (i) das Fällungsmittel in der das Trägermaterial enthaltenen Suspension vorgelegt sein kann und eine Lösung einer oxidhydratbildenden Verbindung und eine Lösung einer Goldverbindung oder ein Gemisch dieser Lösungen in die Vorlage eingetragen werden oder (ii) in eine das Trägermaterial und eine gelöste Goldverbindung enthaltende Suspension eine Lösung einer oxidhydratbildenden Verbindung und eine wäßrige Lösung des Fällungsmittels eingetragen werden oder (iii) in eine das Trägermaterial, eine gelöste Goldverbindung und eine gelöste oxidhydratbildende Verbindung enthaltende Suspension eine Lösung des Fällungsmittels eingetragen wird.

8. Verfahren nach Anspruch 6 oder 7,
dadurch gekennzeichnet,
daß man die Copräzipitation derart durchführt, daß der pH-Wert am Ende im Bereich von etwa 0,5 bis 12, insbesondere etwa 0,5 bis 10,5 liegt.

9. Verfahren nach einem der Ansprüche 6 bis 8,
dadurch gekennzeichnet,
daß man als Reduktionsmittel ein solches aus der Reihe der Dithionite, Thiosulfate, Sulfite, Phosphite, Hypophosphorige Säure und Hypophosphite, Formaldehyd, Urotropin, Hydrazin, Hydroxylamin, Hyponitrit (H₂N₂O₂), Oxohyponitrit (H₂N₂O₃) und Glucose verwendet.

10. Verfahren nach einem der Ansprüche 6 bis 9,
dadurch gekennzeichnet,
daß man als Trägermaterial eine Glasfritte, als oxidhydratbildende lösliche Verbindung eine Zinn(IV)verbindung, insbesondere SnCl₄ ^{.} 5 H₂O, und als lösliche Goldverbindung ein Hydrat von HAuCl₄ verwendet.

11. Verwendung der Pigmente gemäß einem der Ansprüche 1 bis 5 zur Herstellung purpurfarbener keramischer Dekore, insbesondere im Hochtemperaturbrand hergestellter purpurfarbener Dekore.

## Claims

1. Pigment, suitable for the production of purple ceramic decoration in high temperature firing,
substantially comprising (a) one or more finely divided support materials from the range of stovable materials, in particular glass frits, (b) one or more oxide hydrates of one or more of the elements from the range comprising Al, Si, Sn, Pb, Ti, Zr, Nb, Ta, Sc, Y, La, Ce and Zn and (c) one or more water-insoluble gold(III) or gold(I) compounds or colloidal gold,
wherein the support material and oxide hydrate, calculated as oxide, are present in a weight ratio in the range from 10 to 0.1 and the gold content of the pigment is between 0.05 and 10 wt.%, and
obtainable by a process comprising coprecipitation of the one or more oxide hydrates and the water-insoluble gold compound(s) or the colloidal gold in the presence of the support material in an aqueous or aqueous-organic phase in the absence of a reducing agent for the gold compound(s), wherein one or more soluble Au compounds or a solution containing colloidal gold and one or more soluble compounds of the metals present in the oxide hydrate and at least one precipitating agent are used and, where water-insoluble Au compounds present in the coprecipitate are to be converted into colloidal gold, reduction following the coprecipitation by means of a conventional reducing agent or by thermal decomposition at 100 to 300 °C.

2. Pigment according to claim 1,
characterised in that,
it contains a glass frit as the support material and an oxide hydrate of Sn or Zr, in particular of Sn, as the oxide hydrate, wherein the weight ratio of glass frit to oxide hydrate, calculated as oxide, is in the range from 10 to 1.

3. Pigment according to claim 1 or 2,
characterised in that,
it contains a gold(III) hydroxide, a gold(III) ammine hydroxide or gold sulfide as the gold compound and the gold content of the pigment is between 0.5 and 5 wt.%.

4. Pigment according to claim 1 or 2,
characterised in that,
it contains colloidal gold in a quantity of 0.5 to 2.5 wt.% which has been obtained by reduction of the water-insoluble gold compound present in the coprecipitate, in particular gold(III) hydroxide or gold(III) ammine hydroxide, using a reducing agent from the range comprising aldehydes, hydrazine, sulfites, dithionites, thiosulfates, phosphites, hypophosphorous acid and hypophosphites.

5. Pigment according to one of claims 1 to 4,
characterised in that,
one or more substances from the range comprising alkali metal hydroxide, alkali metal carbonate, alkali metal sulfide and/or ammonia were used as the precipitating agent and the pH value at the end of coprecipitation was in the range from approx. 0.5 to approx. 10.5.

6. Process for the production of a pigment according to one of claims 1 to 5,
characterised in that,
one or more oxide hydrates of one or more elements from the range comprising Al, Si, Sn, Pb, Ti, Zr, Nb, Ta, Sc, Y, La, Ce and Zn and one or more substantially water-insoluble gold(III) or gold(I) compound(s) or introduced colloidal gold are coprecipitated in an aqueous or aqueous-organic phase in the presence of one or more finely divided support materials suspended therein from the range of stovable materials in the absence of a reducing agent for gold compounds, wherein one or more soluble compounds of the metals contained in the oxide hydrate, one or more water-soluble gold compounds or a solution containing colloidal gold and one or more precipitating agents are used in a quantity such that a weight ratio of Support material to oxide hydrate, calculated as oxide, in the range from 10 to 0.1, and a gold content in the range from 0.05 to 10 wt.%, is obtained in the pigment, and the coprecipitate is then separated from the liquid phase and dried or, where insoluble gold compounds present in the coprecipitate are to be converted into colloidal gold, the coprecipitate is either treated in the aqueous phase with a reducing agent, then separated from the aqueous phase and dried or the dried coprecipitate is heat treated at 100 to 300 °C.

7. Process according to claim 6,
characterised in that,
one or more precipitating agents from the range comprising alkali metal hydroxide, alkali metal carbonate, alkali metal sulfide and ammonia are used for the coprecipitation, wherein (i) the precipitating agent may be initially introduced into the suspension containing the support material and a solution of an oxide hydrate-forming compound and a solution of a gold compound or a mixture of these solutions are introduced into the initial mixture or (ii) a solution of an oxide hydrate-forming compound and an aqueous solution of the precipitating agent are introduced into a suspension containing the support material and a dissolved gold compound or (iii) a solution of the precipitating agent is introduced into a suspension containing the support material, a dissolved gold compound and a dissolved oxide hydrate-forming compound.

8. Process according to claim 6 or 7,
characterised in that,
coprecipitation is performed in such a manner that the final pH value is in the range from approx. 0.5 to 12, in particular from approx. 0.5 to 10.5.

9. Process according to one of claims 6 to 8,
characterised in that,
a reducing agent from the range comprising dithionites, thiosulfates, sulfites, phosphites, hypophosphorous acid and hypophosphites, formaldehyde, Urotropin, hydrazine, hydroxylamine, hyponitrite (H₂N₂O₂), oxohyponitrite (H₂N₂O₃) and glucose is used as the reducing agent.

10. Process according to one of claims 6 to 9,
characterised in that,
a glass frit is used as the support material, a tin(IV) compound, in particular SnCl₄ ^{.} 5 H₂O, is used as the oxide hydrate-forming soluble compound and a hydrate of HAuCl₄ is used as the soluble gold compound.

11. Use of the pigments according to one of claims 1 to 5 for the production of purple ceramic decoration, in particular purple decoration produced by high temperature firing.

## Revendications

1. Pigment approprié pour la production de décorations céramiques de couleur pourprée lors d'une cuisson à haute température, constitué essentiellement de (a) un ou plusieurs supports fins de la série des matériaux à cuire, en particulier du verre fritté, (b) un ou plusieurs oxydes hydratés d'un ou plusieurs éléments de la série Al, Si, Sn, Pb, Ti, Zr, Nb, Ta, Sc, Y, La, Ce et Zn et (c) un ou plusieurs composés d'or(III) ou d'or(I) insolubles dans l'eau, ou d'or colloïdal, le support et l'oxyde hydraté, calculés sous forme d'oxyde, étant présents dans un rapport pondéral compris entre 10 et 0,1 et la teneur en or du pigment étant comprise entre 0,05 et 10 % en poids, et que l'on peut obtenir par un procédé comprenant une coprécipitation du ou des oxydes hydratés et du ou des composés d'or insolubles dans l'eau ou de l'or colloïdal en présence du support en phase aqueuse ou organique aqueuse en l'absence d'un réducteur du ou des composés d'or, en utilisant un ou plusieurs composés d'or solubles ou une solution contenant de l'or colloïdal, et un ou plusieurs composés solubles des métaux contenus dans l'oxyde hydraté et au moins un agent de précipitation et, suite à la coprécipitation, dans la mesure où l'on doit transformer les composés d'or insolubles dans l'eau contenus dans le co-précipité en or colloïdal, une réduction au moyen d'un réducteur habituel ou par décomposition thermique entre 100 et 300°C.

2. Pigment selon la revendication 1,
caractérisé en ce qu'
il contient comme support un verre fritté et comme oxyde hydraté un oxyde de Sn ou Zr, en particulier de Sn, le rapport pondéral du verre fritté à l'oxyde hydraté, calculé sous forme de l'oxyde, étant dans un intervalle de 10 à 1.

3. Pigment selon la revendication 1 ou 2,
caractérisé en ce qu'
il contient comme composé d'or de l'hydroxyde d'or (III), un aminohydroxyde complexe d'or(III) ou du sulfure d'or, et en ce que la teneur en or du pigment est comprise entre 0,5 et 5 % en poids.

4. Pigment selon la revendication 1 ou 2,
caractérisé en ce qu'
il contient de l'or colloïdal en une quantité de 0,5 à 2,5 % en poids, que l'on a obtenu par réduction du composé d'or insoluble dans l'eau contenu dans le coprécipité, en particulier l'hydroxyde d'or(III) ou l'aminohydroxyde complexe d'or(III) en utilisant un réducteur de la série des aldéhydes, des hydrazines, des sulfites, des dithionites, des thiosulfates, des phosphites, de l'acide hypophosphoreux et des hypophosphites.

5. Pigment selon l'une quelconque des revendications 1 à 4,
caractérisé en ce qu'
on utilise comme agent de précipitation un ou plusieurs corps de la série des hydroxydes de métaux alcalins, des carbonates de métaux alcalins, des sulfures de métaux alcalins et/ou de l'ammonniac, et le pH à la fin de la coprécipitation est compris dans un intervalle allant d'environ 0,5 à environ 10,5.

6. Procédé de fabrication d'un pigment selon l'une des revendications 1 à 5,
caractérisé en ce qu'
on effectue en phase aqueuse ou organique aqueuse en présence d'un ou plusieurs supports fins qui y sont en suspension, de la série des matériaux à cuire, en l'absence d'un réducteur pour les composés d'or, une coprécipitation d'un ou plusieurs oxydes hydratés d'un ou plusieurs des éléments de la série Al, Si, Sn, Pb, Ti, Zr, Nb, Ta, Sc, Y, La, Ce et Zn et d'un ou plusieurs composés d'or(III) ou d'or(I) essentiellement insolubles dans l'eau, ou d'or colloïdal utilisé, en utilisant un ou plusieurs composés solubles des métaux contenus dans l'oxyde hydraté, un ou plusieurs composés d'or solubles dans l'eau ou une solution contenant de l'or colloïdal et un ou plusieurs agents de précipitation en quantité telle que l'on ait dans le pigment un rapport pondéral du support à l'oxyde hydraté, calculé sous forme d'oxyde, compris entre 10 et 0,1 et une teneur en or comprise entre 0,05 et 10 % en poids, et ensuite on sépare le coprécipité de la phase liquide et on le sèche, ou bien dans la mesure où les composés d'or insolubles contenus dans le coprécipité doivent être transformés en or colloïdal, soit on traite le coprécipité en phase aqueuse avec un réducteur, puis on le sépare de la phase aqueuse et on sèche, soit on traite thermiquement le coprécipité séché entre 100 et 300°C.

7. Procédé selon la revendication 6,
caractérisé en ce qu'
on utilise pour la coprécipitation un ou plusieurs agents de précipitation de la série des hydroxydes de métaux alcalins, des carbonates de métaux alcalins, des sulfures de métaux alcalins et de l'ammoniac, (i) l'agent de précipitation étant disposé dans la suspension contenant le support, et une solution d'un composé formant un oxyde hydraté et une solution d'un composé d'or ou un mélange de ces solutions étant introduits dans le récipient, ou (ii) dans une suspension contenant le support et un composé d'or dissous on introduit une solution d'un composé formant un oxyde hydraté et une solution aqueuse de l'agent de précipitation, ou (iii) dans une suspension contenant le support, un composé d'or dissous et un composé formant oxyde hydraté dissous, on introduit une solution de l'agent de précipitation.

8. Procédé selon la revendication 6 ou 7,
caractérisé en ce qu'
on conduit la coprécipitation de manière que le pH à la fin soit compris entre environ 0,5 et 12, en particulier entre environ 0,5 et 10,5.

9. Procédé selon l'une des revendications 6 à 8,
caractérisé en ce qu'
on utilise comme réducteur un réducteur de la série dithionites, des thiosulfates, des sulfates, des sulfites, des phosphites, de l'acide hypophosphoreux et des hypophosphites, du formaldéhyde, de l'urotropine, de l'hydrazine, de l'hydroxylamine, de l'hyponitrite (H₂N₂O₂), de l'oxohyponitrite (H₂N₂O₃) et du glucose.

10. Procédé selon l'une des revendications 6 à 9,
caractérisé en ce qu'
on utilise comme support un verre fritté, comme composé soluble formant un oxyde hydraté un composé d'étain(IV), en particulier SnCl₄.H₂O, et comme composé d'or soluble un hydrate d'HAuCl₄.

11. Utilisation des pigments selon l'une des revendications 1 à 5 pour la production de décors céramiques de couleur pourprée, en particulier dans les décorations de couleur pourprée produites par cuisson à haute température.
